# EUROPÄISCHE PATENTSCHRIFT

(11) **EP 3 151 303 B1**
(45) Veröffentlichungstag und Bekanntmachung des Hinweises auf die Patenterteilung: **11.09.2019**
(21) Anmeldenummer: 15187770.1
(22) Anmeldetag: 30.09.2015
(51) Int. Cl.: H01M 2/02, H01M 10/04, H01M 2/04, H01M 2/08

(54) **HALBZEUG, VERFAHREN ZUR HERSTELLUNG EINER KNOPFZELLE UND KNOPFZELLE**
SEMI-FINISHED PRODUCT, METHOD FOR THE PREPARATION OF A BUTTON CELL AND A BUTTON CELL
DEMI-PRODUIT, PROCEDE DE FABRICATION D'UNE PILE BOUTON ET PILE BOUTON

(43) Veröffentlichungstag der Anmeldung: 05.04.2017
(73) Patentinhaber: VARTA Microbattery GmbH, 73479 Ellwangen (DE)
(72) Erfinder: Kohls, Ulrich, 73460 Hüttlingen (DE); Kreidler, Bernd, 73479 Ellwangen (DE)
(74) Vertreter: Patentanwaltskanzlei Cartagena

(56) Entgegenhaltungen:
- DE-A1- 19 647 593
- Dietrich Berndt ET AL: "Batteries" In: "Ullmann's Encyclopedia of Industrial Chemistry", 15. Juni 2001 (2001-06-15), Wiley-VCH Verlag GmbH & Co. KGaA, Weinheim, Germany, XP055071720, ISBN: 978-3-52-730673-2 DOI: 10.1002/14356007.a03_343, * Abbildung 23 *
- John P Beaumont: "4 Auswahl des Anspritzpunkts und Spritzgießstrategien" In: "Auslegung von Anguss und Angusskanal - Spritzgießwerkzeuge erfolgreich einsetzen", 1 January 2012 (2012-01-01), Carl Hanser Verlag GmbH & Co. KG, XP055560888, ISBN: 978-3-446-42759-4 pages 53-84, DOI: 10.3139/9783446428799,

## Beschreibung

Die vorliegende Erfindung betrifft ein Halbzeug zur Herstellung einer Dichtung für Knopfzellen. Weiterhin betrifft die Erfindung ein Verfahren zur Herstellung von Knopfzellen.

Eine besonders bekannte Ausführungsform einer elektrochemischen Zelle ist die Knopfzelle. Eine Knopfzelle weist üblicherweise ein zylindrisches Gehäuse auf, dessen Höhe kleiner als sein Durchmesser ist und das eine positive und eine negative Elektrode einschließt. In dem Gehäuse können unterschiedliche elektrochemische Systeme enthalten sein. Sehr verbreitet sind Knopfzellen auf Basis von Zink/Luft, Zink/MnO₂ und Nickel/Zink. Auch sekundäre Systeme, z.B. auf Basis von Nickel/Metallhydrid, Nickel/Cadmium oder auf Basis von Lithium, sind sehr verbreitet.

Das Gehäuse von Knopfzellen besteht in aller Regel aus zwei Gehäusehalbteilen, zwischen denen eine elektrisch isolierende Dichtung angeordnet ist. Eines der Gehäusehalbteile steht in elektrischer Verbindung mit der positiven Elektrode und ist entsprechend positiv gepolt. Das andere steht in elektrischer Verbindung mit der negativen Elektrode und ist entsprechend negativ gepolt. Die Dichtung soll einen elektrischen Kontakt zwischen den entgegengesetzt gepolten Gehäusehalbteilen unterbinden. Darüber hinaus soll sie einem Entweichen und auch einem Eindringen von Flüssigkeit oder Feuchtigkeit aus dem oder in das Gehäuse entgegenwirken.

Eine sehr wichtige Eigenschaft von Knopfzellen ist ihre Kapazität. Um eine hohe Kapazität zu erreichen, muss möglichst viel Raum für elektrochemisch aktive Materialien bereitgestellt werden. Hierzu werden das Gehäuse und die erwähnte Dichtung mit sehr geringen Wandstärken bereitgestellt. So lassen sich beispielsweise mit dem in der DE 196 47 593 A1 beschriebenen Verfahren Dichtungen mit einer Dicke < 100 µm mittels eines Tiefziehprozesses herstellen. Auch moderne Spritzgussanlagen sind mittlerweile in der Lage, Dichtungen mit solchen Wandstärken zu produzieren.

Dem Streben nach immer dünneren Dichtungen sind allerdings Grenzen gesetzt. Je dünner die eingesetzten Dichtungen sind, desto schwieriger lassen sie sich verarbeiten. Zur Verarbeitung bedarf es einer hinreichenden mechanischen Belastbarkeit. Diese ist bei Dicken < 100 µm oft nicht mehr gegeben.

Der vorliegenden Erfindung lag die Aufgabe zugrunde, Knopfzellen mit möglichst dünnen Dichtungen bereitzustellen. Ein besonderer Fokus sollte dabei auf der Verarbeitbarkeit der eingesetzten Dichtungsmaterialien in automatisierten Prozessen gelegt werden.

Die gestellte Aufgabe wird durch das Halbzeug mit den Merkmalen des Anspruchs 1 sowie durch das Verfahren mit den Merkmalen des Anspruchs 5 gelöst. Bevorzugte Ausführungsformen des erfindungsgemäßen Halbzeugs sind in den abhängigen Ansprüchen 2 bis 4 angegeben. Bevorzugte Ausführungsformen des erfindungsgemäßen Verfahrens finden sich in den abhängigen Ansprüchen 6 bis 8.

Das erfindungsgemäße Halbzeug dient zur Herstellung einer Dichtung für Knopfzellen. Es zeichnet sich dadurch aus, dass es als Hohlzylinder ausgebildet ist, der einen Mantel umfasst und stirnseitig durch je einen umlaufenden Rand begrenzt wird. Einer der Ränder ist dabei als nach außen gerichteter ringförmiger Kragen ausgebildet.

Erfindungsgemäß ist es vorgesehen, dass der Mantel des Halbzeugs einer Knopfzelle als Dichtung dient. Dem Kragen kommt hingegen die Funktion zu, den Mantel bei einer Verarbeitung des Halbzeugs mechanisch zu stabilisieren. Mit Hilfe des Kragens lassen sich zylindrische Mantelsegmente in automatisierten Prozessen als Dichtungen zwischen den genannten Halbteilen eines Knopfzellengehäuses anordnen, die aufgrund ihrer geringen Dicke nicht verarbeitet werden könnten.

In besonders bevorzugten Ausführungsformen ist der andere der den Hohlzylinder stirnseitig begrenzenden Ränder als nach innen gerichteter ringförmiger Kragen ausgebildet. In dieser Ausführungsform weist das Halbzeug also an einer Stirnseite einen nach außen gerichteten ringförmigen Kragen auf und an der anderen Stirnseite einen nach innen gerichteten ringförmigen Kragen.

Es ist bevorzugt, dass die beiden ringförmigen Krägen parallel zueinander und senkrecht zu einer fiktiven Längsachse des hohlzylindrisch ausgebildeten Halbzeugs angeordnet sind.

Der Hohlzylinder weist im Bereich des zylindrischen Mantels eine Wandstärke im Bereich zwischen 10 µm und 100 µm, besonders bevorzugt zwischen 25 µm und 100 µm, insbesondere zwischen 50 µm und 100 µm, auf.

Das erfindungsgemäße Halbzeug ist, anders als die in der DE 196 47 593 A1 beschriebenen Dichtungen, in einer Spritzgussform mittels eines Spritzgussverfahrens hergestellt. Entsprechend ist das Halbzeug bevorzugt einstückig ausgebildet und aus Kunststoff geformt. Besonders bevorzugt besteht es aus Polyamid.

Wird ein Produkt mittels eines Spritzguss- oder Spritzpressverfahrens gefertigt, so weist es nach der Fertigung meist einen Überstand an der Stelle auf, an der das Material, aus dem es gefertigt wurde, in die Spritzguss- bzw. Spritzpressform eingespritzt wurde. Der Überstand kann von dem Produkt abgetrennt werden, wobei der Abtrennprozess in aller Regel charakteristische Spuren hinterlässt. Sowohl der Überstand selbst als auch Spuren, die durch den genannten Abtrennprozess entstanden sind, bezeichnet man gemeinhin als Anspritzpunkte.

Das Halbzeug weist mindestens einen solchen Anspritzpunkt auf, wobei der mindestens eine Anspritzpunkt ausschließlich an dem nach außen gerichteten ringförmigen Kragen lokalisiert ist. Durch die Lokalisierung des Anspritzpunkts an dem nach außen gerichteten Kragen sind weder seine Entfernung noch eventuelle Spuren der Entfernung von Relevanz. Anderes würde gelten, wenn das Halbzeug wie klassische, durch Spritzguss hergestellte Dichtungen im Bereich des Mantels (und damit im Dichtungsbereich) Anspritzpunkte aufweisen würde. In diesem Fall müssten diese sehr sorgsam entfernt werden, um die Dichtung selbst nicht zu beschädigen.

In besonders bevorzugten Ausführungsformen weist der Mantel einen in Richtung des nach außen gerichteten ringförmigen Kragens ansteigenden Innendurchmesser auf. Da die Wandstärke des Hohlzylinders im Bereich des zylindrischen Mantels bevorzugt konstant ist, steigt bevorzugt gleichzeitig auch der Außendurchmesser des Mantels in Richtung des nach außen gerichteten ringförmigen Kragens. Eine derartige Ausgestaltung des Mantels kann sinnvoll sein, um die Verarbeitung des Halbzeugs zu erleichtern. Streng genommen ist das Halbzeug in dieser Ausführungsform nicht mehr streng hohlzylindrisch ausgebildet. Allerdings fällt der Anstieg des Innendurchmessers moderat aus. Bevorzugt weist ein derart ausgebildeter Mantel einen Konuswinkel zwischen 0,1° und 5°, bevorzugt zwischen 0,1° und 2°, besonders bevorzugt zwischen 0,1° und 1°, auf.

In einer weiteren bevorzugten Ausführungsform ist der nach innen gerichtete ringförmige Kragen derart ausgebildet, dass er mit dem Mantel einen ringförmigen Spalt einschließt. Dieser Spalt kann dazu dienen, den Rand eines Gehäusehalbteils aufzunehmen. Auf diese Ausführungsform wird unten noch detaillierter eingegangen.

Der nach außen gerichtete ringförmige Kragen kann in bevorzugten Ausführungsformen eine konisch aufgeweitete Innenseite aufweisen. Auch diese Ausführungsform kann die Verarbeitung des Halbzeugs erleichtern.

Bei dem erfindungsgemäßen Verfahren handelt es sich um ein Verfahren zur Herstellung einer Knopfzelle, die ein Gehäuse aus zwei metallischen Gehäusehalbteilen, die mittels einer elektrisch isolierenden Dichtung voneinander getrennt sind, aufweist. Das Verfahren zeichnet sich dadurch aus, dass die Dichtung aus dem beschriebenen Halbzeug hergestellt wird.

Es ist bevorzugt, dass zur Herstellung der Dichtung der nach außen gerichtete ringförmige Kragen vom Mantel abgetrennt wird. Dies kann beispielsweise mittels eines Messers oder mittels eines Lasers geschehen.

In bevorzugten Ausführungsformen umfasst das erfindungsgemäße Verfahren die folgenden Schritte:
1. Bereitstellung eines ersten becherförmigen Gehäusehalbteils, das einen Becherboden, eine umlaufende Becherwand, einen Becherrand mit einer endständigen Schnittkante und eine von dem Becherrand definierte Öffnung aufweist.
2. Montieren des Halbzeugs auf das erste becherförmige Gehäusehalbteil, vorzugsweise durch Aufziehen des Halbzeugs auf das Gehäusehalbteil oder durch Einschieben des Gehäusehalbteils in das Halbzeug, so dass der Mantel des Halbzeugs auf der umlaufenden Becherwand aufliegt, in bevorzugten Ausführungsformen diese vollständig bedeckt.
3. Bereitstellung eines zweiten becherförmigen Gehäusehalbteils, das einen Becherboden, eine umlaufende Becherwand, einen Becherrand mit einer endständigen Schnittkante und eine von dem Becherrand definierte Öffnung aufweist.
4. Abtrennen des nach außen gerichteten ringförmigen Kragens.
5. Einschieben des ersten becherförmigen Gehäusehalbteils samt dem Halbzeug mit dem Becherrand voran in das zweite Gehäusehalbteil.

Das Abtrennen des Kragens kann sowohl nach dem Einschieben des ersten becherförmigen Gehäusehalbteils in das zweite Gehäusehalbteil erfolgen als auch vor diesem Schritt.

Da der Kern der vorliegenden Erfindung die Dichtung einer Knopfzelle betrifft und nicht die Komponenten innerhalb des Knopfzellengehäuses, wird auf letztere nicht detailliert eingegangen. Der Vollständigkeit halber sei jedoch erwähnt, dass vor oder nach dem Montieren des Halbzeugs eine Elektrode in das erste Gehäusehalbteil eingebracht wird, während das zweite Gehäusehalbteil in aller Regel bereits mitsamt einer Elektrode bereitgestellt wird. Neben den Elektroden wird in aller Regel noch ein Separator in einem der beiden Gehäusehalbteile positioniert, bevor das erste becherförmige Gehäusehalbteil in das zweite Gehäusehalbteil eingeschoben wird. Es ist bevorzugt, vor diesem Schritt auch mindestens eine der Elektroden mit einem Elektrolyten zu tränken. Zum Schließen des Gehäuses kann der Becherrand des zweiten Gehäusehalbteils radial eingedrückt oder eingezogen werden, insbesondere bis das erste und das zweite becherförmige Gehäusehalbteil formschlüssig miteinander verbunden sind. Diesen Prozess bezeichnet man gemeinhin auch als Bördelung.

In bevorzugten Ausführungsformen des erfindungsgemäßen Verfahrens wird das oben bereits erwähnte Halbzeug mit dem nach innen gerichteten ringförmigen Kragen zur Herstellung der Dichtung verwendet, insbesondere in der Ausführungsform, in der der Kragen mit dem Mantel des Halbzeugs einen ringförmigen Spalt einschließt. Bei der Montage des Halbzeugs kann der Becherrand des ersten Gehäusehalbteils in den Spalt eingeschoben werden. Der nach innen gerichtete Kragen kann somit als Stützelement für das erste becherförmige Gehäusehalbteil dienen. Darüber hinaus ist es möglich, in den Spalt vor dem Einschieben des Becherrands ein Dichtmittel einzubringen und dadurch die Dichtungseigenschaften der herzustellenden Knopfzelle zu verbessern. Das Einbringen des Dichtmittels in den Spalt erfolgt bevorzugt vor Schritt 2. oben, also bevor das Halbzeug auf das erste becherförmige Gehäusehalbteil montiert wird.

Eine unter Verwendung des beschriebenen Halbzeugs sowie weiter bevorzugt unter Anwendung des beschriebenen Verfahrens hergestellte Knopfzelle umfasst stets
- ein Gehäuse aus einem positiv und einem negativ gepolten Gehäusehalbteil sowie eine elektrisch isolierende Dichtung, die zwischen den Gehäusehalbteilen angeordnet ist,
- eine positive Elektrode, die innerhalb des Gehäuses angeordnet ist und in elektrischem Kontakt mit dem positiv gepolten Gehäusehalbteil steht,
- eine negative Elektrode, die innerhalb des Gehäuses angeordnet ist und in elektrischem Kontakt mit dem negativ gepolten Gehäusehalbteil steht, und
- einen ionenleitfähigen Separator, der in dem Gehäuse zwischen der positiven und der negativen Elektrode angeordnet ist.

Die Knopfzelle zeichnet sich dadurch aus, dass die Dichtung durch Spritzguss hergestellt ist und frei von Anspritzpunkten ist. Wie oben bereits ausgeführt wurde, ist es erfindungsgemäß bevorzugt, dass das beschriebene Halbzeug einen oder mehrere Anspritzpunkte ausschließlich an dem nach außen gerichteten ringförmigen Kragen aufweist. Da dieser Kragen während der Herstellung der Knopfzelle abgeschnitten wird, weist die resultierende Dichtung keine Anspritzpunkte mehr auf.

In Übereinstimmung mit obigen Ausführungen weist die Dichtung erfindungsgemäß eine Dicke im Bereich von 10 µm bis 100 µm, bevorzugt im Bereich von 25 µm bis 100 µm, insbesondere im Bereich von 50 µm bis 100 µm, auf.

Ebenfalls entsprechend den obigen Ausführungsformen ist die Dichtung in bevorzugten Ausführungsformen hohlzylindrisch ausgebildet und umfasst einen Mantel, der an einer Stirnseite einen nach innen gerichteten ringförmigen Kragen aufweist, welcher mit dem Mantel einen ringförmigen Spalt einschließt. Bevorzugt ist mindestens eines der Gehäusehalbteile becherförmig ausgebildet und weist einen Becherrand mit einer endständigen Schnittkante auf, wobei der Becherrand in den ringförmigen Spalt eingeschoben ist.

Bei der Knopfzelle handelt es sich bevorzugt um eine Zink/Luft-Zelle, eine Silberoxid/Zink-Zelle, eine Zink/Braunstein-Zelle (auch bekannt als Alkali-Mangan-Zelle), eine Quecksilberoxid/Zink-Zelle, eine Nickel/Eisen-Zelle (Edison-Akkumulator), eine Nickel/Metallhydrid-Zelle, eine Nickel/Zink-Zelle oder eine Nickel/Cadmium- Zelle.

Die genannten und weitere Vorteile der Erfindung ergeben sich auch aus der nun folgenden Beschreibung der Zeichnungen in Verbindung mit dem beschriebenen Ausführungsbeispiel. Die im Folgenden beschriebenen bevorzugten Ausführungsformen dienen lediglich zur Erläuterung und zum besseren Verständnis der Erfindung und sind in keiner Weise einschränkend zu verstehen.

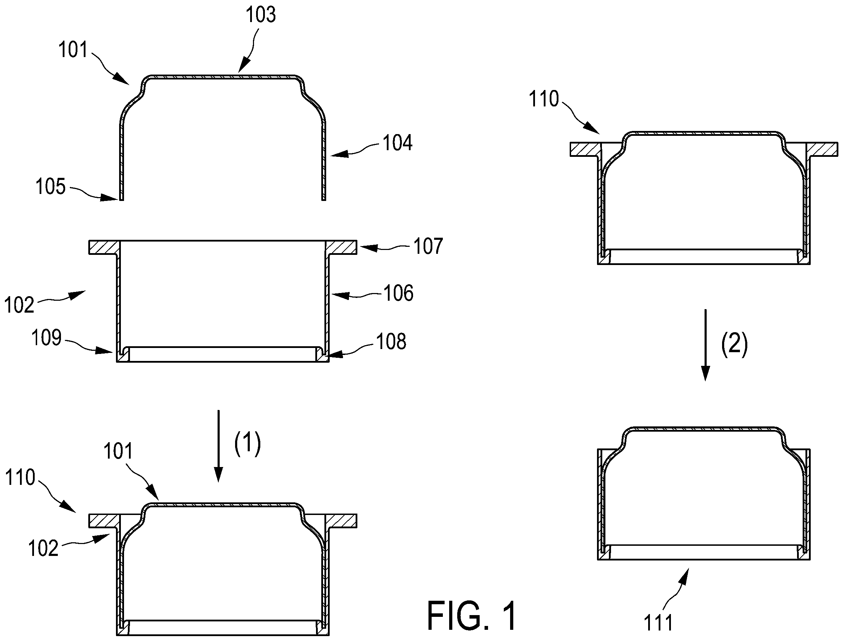

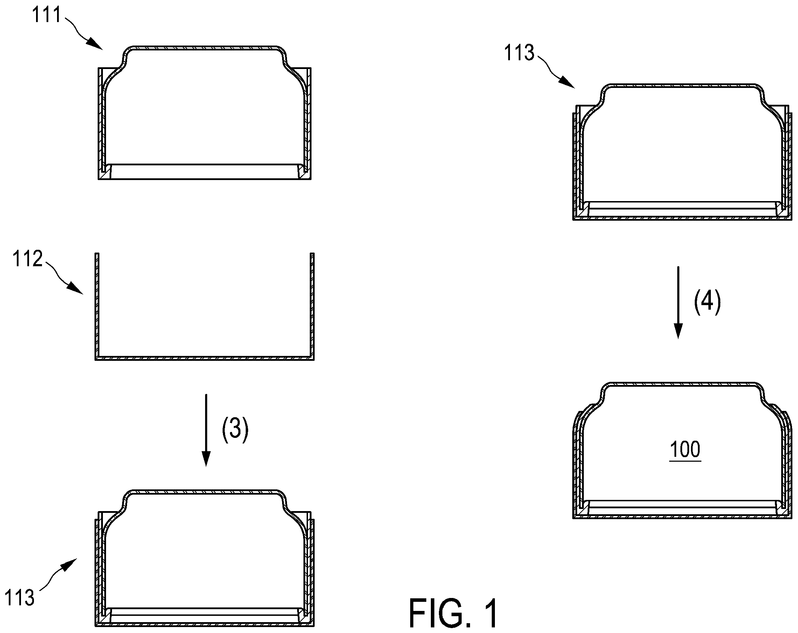

In Fig. 1 sind schematisch eine Ausführungsform eines erfindungsgemäßen Halbzeugs, eine Ausführungsform eines erfindungsgemäßen Verfahrens und eine daraus resultierende Ausführungsform einer Knopfzelle dargestellt (alle Darstellungen sind schematische Querschnittsdarstellungen).

Zur Herstellung der Knopfzelle 100 werden ein Gehäusehalbteil 101 und ein Halbzeug 102 bereitgestellt. Das Gehäusehalbteil 101 weist einen Becherboden 103, eine umlaufende Becherwand 104 und einen die Becheröffnung definierenden Rand 105 auf. Das Halbzeug 102 ist hohlzylindrisch ausgebildet. Es weist einen Mantel 106 auf. An seinen Stirnseiten wird es durch zwei Ränder begrenzt, von denen einer als nach außen gerichteter Kragen 107 und der andere als nach innen gerichteter Kragen 108 ausgebildet ist. Zur Herstellung der Knopfzelle 100 wird in einem ersten Schritt das Gehäusehalbteil 101 mit dem Becherrand 105 voran in das hohlzylindrisch ausgebildete Halbzeug 102 eingeschoben. Der Einschub erfolgt durch die vom Rand 107 definierte Öffnung. Das Gehäusehalbteil 101 wird so weit in das Halbzeug 102 eingeschoben, bis der Rand 105 in dem von dem Mantel 106 und dem Kragen 108 definierten Spalt 109 aufsitzt.

Das so erhaltene Zwischenprodukt 110 wird in einem Schneidprozess (2) weiterverarbeitet. Hierbei wird der Kragen 107 abgetrennt. Man erhält das Zwischenprodukt 111. Dieses wird anschließend in ein zweites Gehäusehalbteil 112 eingeschoben unter Erhalt des Zwischenprodukts 113. Letzteres wird im Bördelprozess (4) zur Knopfzelle 100 weiterverarbeitet.

Aus Gründen der Übersichtlichkeit sind in den Zeichnungen keine der üblicherweise in einem Knopfzellengehäuse enthaltenen Komponenten (insbesondere Elektroden und Separator) dargestellt.

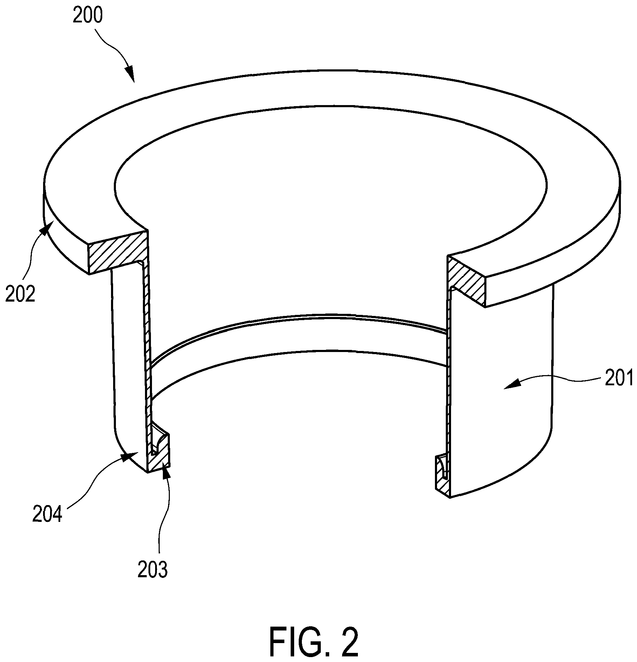

In Fig. 2 ist in dreidimensionaler Darstellung eine Ausführungsform eines erfindungsgemäßen Halbzeugs 200 dargestellt. Das Halbzeug ist als Hohlzylinder ausgebildet mit dem Mantel 201 sowie zwei endständigen Rändern 202 und 203. Der Rand 202 ist als nach außen gerichteter Kragen ausgebildet. Der Rand 203 ist als nach innen gerichteter Kragen ausgebildet. Der Kragen schließt mit dem Mantel 201 einen Spalt 204 ein.

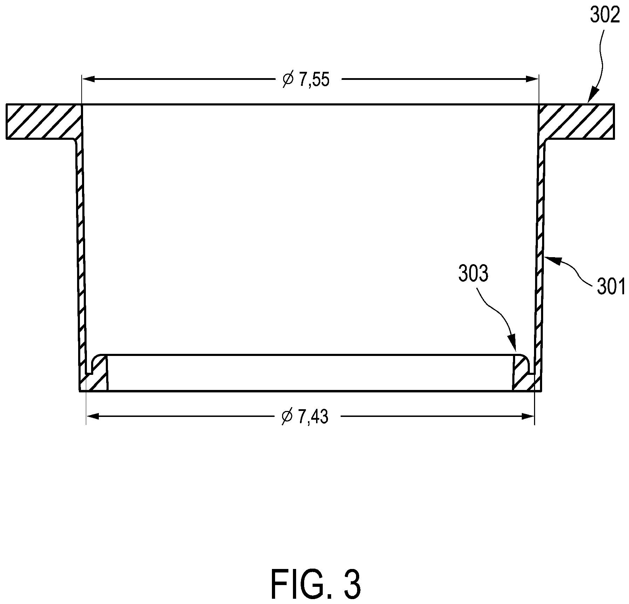

In Fig. 3 ist ein Querschnitt des in Fig. 2 abgebildeten Halbzeugs dargestellt. Der Mantel 301 weist ausgehend vom nach innen gerichteten Kragen 303 in Richtung des nach außen gerichteten ringförmigen Kragens 302 einen ansteigenden Innendurchmesser auf. Da die Wandstärke des Mantels 301 konstant ist, steigt gleichzeitig auch der Außendurchmesser des Mantels in Richtung des nach außen gerichteten ringförmigen Kragens 302. Entsprechend weist der Mantel 301 an seinem unteren, am Kragen 303 gelegenen Ende einen kleineren Durchmesser (im Beispiel 7,43) auf als an seinem oberen Ende (im Beispiel 7,55).

## Patentansprüche

1. Halbzeug (102; 200) zur Herstellung einer Dichtung für Knopfzellen, wobei
• das Halbzeug als Hohlzylinder ausgebildet ist, der einen Mantel (106; 201; 301) umfasst und stirnseitig durch je einen umlaufenden Rand begrenzt wird, und
• einer der Ränder als nach außen gerichteter ringförmiger Kragen (107; 202; 302) ausgebildet ist, wobei
• der Hohlzylinder im Bereich des zylindrischen Mantels (106; 201; 301) eine Wandstärke im Bereich zwischen 10 µm und 100 µm aufweist,
**dadurch gekennzeichnet, dass**
• das Halbzeug in einer Spritzgussform hergestellt ist,
• das Halbzeug mindestens einen Anspritzpunkt aufweist, und
• der mindestens eine Anspritzpunkt ausschließlich an dem nach außen gerichteten ringförmigen Kragen (107; 202; 302) lokalisiert ist.

2. Halbzeug nach Anspruch 1, **dadurch gekennzeichnet, dass** der andere Rand als nach innen gerichteter ringförmiger Kragen (108; 203; 303) ausgebildet ist.

3. Halbzeug nach Anspruch 1 oder Anspruch 2, **dadurch gekennzeichnet, dass** der Hohlzylinder im Bereich des zylindrischen Mantels (106; 201; 301) eine Wandstärke ≤ 90 µm aufweist.

4. Halbzeug nach einem der vorhergehenden Ansprüche, **dadurch gekennzeichnet, dass**
• der Mantel (106; 201; 301) einen in Richtung des nach außen gerichteten ringförmigen Kragens (107; 202; 302) ansteigenden Innendurchmesser und/oder ansteigenden Außendurchmesser aufweist
und /oder
• dass der nach innen gerichtete ringförmige Kragen (108; 203; 303) mit dem Mantel (106; 201; 301) einen ringförmigen Spalt (109; 204) einschließt und/oder
• dass der nach außen gerichtete ringförmige Kragen (107; 202; 302) eine konisch aufgeweitete Innenseite aufweist.

5. Verfahren zur Herstellung einer Knopfzelle (100) mit einem Gehäuse aus zwei metallischen Gehäusehalbteilen (101, 112), die mittels einer elektrisch isolierenden Dichtung voneinander getrennt sind, wobei die Dichtung aus einem Halbzeug (100; 200) gemäß einem der vorhergehenden Ansprüche hergestellt wird.

6. Verfahren nach Anspruch 5, **dadurch gekennzeichnet, dass** zur Herstellung der Dichtung der nach außen gerichtete ringförmige Kragen (107; 202; 302) vom Mantel (106; 201; 301) abgetrennt wird.

7. Verfahren nach einem der Ansprüche 5 oder 6, umfassend die Schritte
• Bereitstellung eines ersten becherförmigen Gehäusehalbteils (101), das einen Becherboden (103), eine umlaufende Becherwand (104), einen Becherrand (105) mit einer endständigen Schnittkante und eine von dem Becherrand (105) definierte Öffnung aufweist,
• Montieren des Halbzeugs (100; 200) auf das erste becherförmige Gehäusehalbteil (101), so dass der Mantel (106; 201; 301) des Halbzeugs auf der umlaufenden Becherwand (104) aufliegt,
• Bereitstellung eines zweiten becherförmigen Gehäusehalbteils (112), das einen Becherboden, eine umlaufende Becherwand, einen Becherrand mit einer endständigen Schnittkante und eine von dem Becherrand definierte Öffnung aufweist,
• Abtrennen des nach außen gerichteten ringförmigen Kragens (107; 202; 302), und
• Einschieben des ersten becherförmigen Gehäusehalbteils 101 samt dem Halbzeug mit dem Becherrand voran in das zweite Gehäusehalbteil (112).

8. Verfahren nach Anspruch 7, **dadurch gekennzeichnet, dass** das Halbzeug den nach innen gerichteten ringförmigen Kragen (108; 203; 303) aufweist, der mit dem Mantel (106; 201; 301) einen ringförmigen Spalt (109; 204) einschließt, und bei der Montage des Halbzeugs auf das erste becherförmige Gehäusehalbteil (101) der Becherrand des ersten Gehäusehalbteils in den Spalt (109; 204) eingeschoben wird.

## Claims

1. Semi-finished product (102; 200) for producing a seal for button cells, wherein
• the semi-finished product is designed as a hollow cylinder which comprises a shell (106; 201; 301) and is bounded on the end sides by a respective annular edge, and
• one of the edges is designed as an outwardly directed annular collar (107; 202; 302), wherein
• the hollow cylinder has a wall thickness within the range of between 10 µm and 100 µm in the region of the cylindrical shell (106; 201; 301), **characterized in that**
• the semi-finished product is produced in an injection mould,
• the semi-finished product has at least one injection point, and
• the at least one injection point is located exclusively on the outwardly directed annular collar (107; 202; 302).

2. Semi-finished product according to Claim 1, **characterized in that** the other edge is designed as an inwardly directed annular collar (108; 203; 303).

3. Semi-finished product according to Claim 1 or Claim 2, **characterized in that** the hollow cylinder has a wall thickness ≤ 90 µm in the region of the cylindrical shell (106; 201; 301).

4. Semi-finished product according to one of the preceding claims, **characterized in that**
• the shell (106; 201; 301) has an inside diameter and/or an increasing outside diameter in the direction of the outwardly directed annular collar (107; 202; 302),
and/or
• **in that** the inwardly directed annular collar (108; 203; 303) encloses an annular gap (109; 204) with the shell (106; 201; 301), and/or
• **in that** the outwardly directed annular collar (107; 202; 302) has a conically widened inner side.

5. Method for producing a button cell (100) having a housing composed of two metallic housing half parts (101, 112) which are separated from each other by means of an electrically insulating seal, wherein the seal is produced from a semi-finished product (100; 200) according to one of the preceding claims.

6. Method according to Claim 5, **characterized in that** the outwardly directed annular collar (107; 202; 302) is detached from the shell (106; 201; 301) in order to produce the seal.

7. Method according to either of Claims 5 and 6, comprising the steps of
• providing a first cup-shaped housing half part (101) which has a cup base (103), an encircling cup wall (104), a cup edge (105) having an end cut edge, and an opening defined by the cup edge (105),
• mounting the semi-finished product (100; 200) onto the first cup-shaped housing half part (101) such that the shell (106; 201; 301) of the semi-finished product rests on the encircling cup wall (104),
• providing a second cup-shaped housing half part (112) which has a cup base, an encircling cup wall, a cup edge having an end cup edge, and an opening defined by the cut edge,
• detaching the outwardly directed annular collar (107; 202; 302), and
• pushing the first cup-shaped housing half part (101) together with the semi-finished product, with the cup edge in front, into the second housing half part (112).

8. Method according to Claim 7, **characterized in that** the semi-finished product has the inwardly directed annular collar (108; 203; 303) which encloses an annular gap (109; 204) with the shell (106; 201; 301), and, as the semi-finished product is mounted onto the first cup-shaped housing half part (101), the cup edge of the first housing half part is pushed into the gap (109; 204).

## Revendications

1. Demi-produit (102 ; 200) destiné à la fabrication d'une garniture d'étanchéité pour des piles boutons,
• le demi-produit étant réalisé sous la forme d'un cylindre creux qui comporte une enveloppe (106 ; 201 ; 301) et qui est respectivement délimité du côté frontal par un bord circonférentiel, et
• l'un des bords étant réalisé sous la forme d'un collet (107 ; 202 ; 302) de forme annulaire orienté vers l'extérieur,
• le cylindre creux possédant, dans la zone de l'enveloppe (106 ; 201 ; 301) cylindrique, une épaisseur de paroi dans la plage entre 10 µm et 100 µm, **caractérisé en ce que**
• le demi-produit est fabriqué dans un moule de moulage par injection,
• le demi-produit possède au moins un point d'injection et
• l'au moins un point d'injection est localisé uniquement au niveau du collet (107 ; 202 ; 302) de forme annulaire orienté vers l'extérieur.

2. Demi-produit selon la revendication 1, **caractérisé en ce que** l'autre bord est réalisé sous la forme d'un collet (108 ; 203 ; 303) de forme annulaire orienté vers l'intérieur.

3. Demi-produit selon la revendication 1 ou la revendication 2, **caractérisé en ce que** le cylindre creux présente, dans la zone de l'enveloppe (106 ; 201 ; 301) cylindrique, une épaisseur de paroi ≤ 90 µm.

4. Demi-produit selon l'une des revendications précédentes, **caractérisé en ce que**
• l'enveloppe (106 ; 201 ; 301) possède un diamètre intérieur croissant et/ou un diamètre extérieur croissant en direction du collet (107 ; 202 ; 302) de forme annulaire orienté vers l'extérieur
et/ou
• **en ce que** le collet (108 ; 203 ; 303) de forme annulaire orienté vers l'intérieur, avec l'enveloppe (106 ; 201 ; 301), renferme un interstice (109 ; 204) de forme annulaire
et/ou
• **en ce que** le collet (107 ; 202 ; 302) de forme annulaire orienté vers l'extérieur possède un côté intérieur élargi de manière conique.

5. Procédé de fabrication d'une pile bouton (100) comprenant un boîtier constitué de deux demi-parties de boîtier (101, 112) métalliques, lesquelles sont séparées l'une de l'autre au moyen d'une garniture d'étanchéité électriquement isolante, la garniture d'étanchéité étant fabriquée à partir d'un demi-produit (100 ; 200) selon l'une des revendications précédentes.

6. Procédé selon la revendication 5, **caractérisé en ce que** pour la fabrication de la garniture d'étanchéité, le collet (107 ; 202 ; 302) de forme annulaire orienté vers l'extérieur est séparé de l'enveloppe (106 ; 201 ; 301) .

7. Procédé selon l'une des revendications 5 ou 6, comprenant les étapes suivantes
• fourniture d'une première demi-partie de boîtier (101) en forme de godet, laquelle possède un fond de godet (103), une paroi de godet (104) circonférentielle, un bord de godet (105) ayant une arête de coupe terminale et une ouverture définie par le bord de godet (105),
• montage du demi-produit (100 ; 200) sur la première demi-partie de boîtier (101) en forme de godet, de sorte que l'enveloppe (106 ; 201 ; 301) du demi-produit repose sur la paroi de godet (104) circonférentielle,
• fourniture d'une deuxième demi-partie de boîtier (112) en forme de godet, laquelle possède un fond de godet, une paroi de godet circonférentielle, un bord de godet ayant une arête de coupe terminale et une ouverture définie par le bord de godet,
• détachement du collet (107 ; 202 ; 302) de forme annulaire orienté vers l'extérieur et
• insertion de la première demi-partie de boîtier (101) en forme de godet ainsi que du demi-produit avec le bord de godet vers l'avant dans la deuxième demi-partie de boîtier (112).

8. Procédé selon la revendication 7, **caractérisé en ce que** le demi-produit possède le collet (108 ; 203 ; 303) de forme annulaire orienté vers l'intérieur qui, avec l'enveloppe (106 ; 201 ; 301), renferme un interstice (109 ; 204) de forme annulaire, et lors du montage du demi-produit sur la première demi-partie de boîtier (101) en forme de godet, le bord de godet de la première demi-partie de boîtier est inséré dans l'interstice (109 ; 204).
